# EUROPEAN PATENT SPECIFICATION

(11) **EP 4 025 004 B1**
(45) Date of publication and mention of the grant of the patent: **02.10.2024**
(21) Application number: 20217943.8
(22) Date of filing: 30.12.2020
(51) Int. Cl.: H04W 76/10, H04W 76/18, H04W 84/12

(54) **A METHOD FOR ESTABLISHING COMMUNICATION IN A WIRELESS NETWORK, AND CORRESPONDING WIRELESS COMMUNICATION SYSTEM**
VERFAHREN ZUR HERSTELLUNG EINER KOMMUNIKATION IN EINEM DRAHTLOSEN NETZWERK, UND ENTSPRECHENDES DRAHTLOSES KOMMUNIKATIONSSYSTEM
PROCÉDÉ PERMETTANT D'ÉTABLIR UNE COMMUNICATION DANS UN RÉSEAU SANS FIL, ET SYSTÈME DE COMMUNICATION SANS FIL CORRESPONDANT

(43) Date of publication of application: 06.07.2022
(73) Proprietor: Advanced Digital Broadcast S.A., 1293 Bellevue (CH)
(72) Inventor: NIZIOLEK, Jan, 65-119 Zielona Gora (PL)
(74) Representative: Kancelaria Eupatent.pl Sp. z.o.o

(56) References cited:
- EP-A1- 3 174 356
- US-A1- 2013 223 423
- US-A1- 2019 199 458
- MINGMING LU ET AL: "Localized Access Point Association in Wireless LANs with Bounded Approximation Ratio", PROCEEDINGS OF 17TH INTERNATIONAL CONFERENCE ON COMPUTER COMMUNICATIONS AND NETWORKS, 2008, ICCCN '08 : 3 - 7 AUG. 2008, ST. THOMAS, U.S. VIRGIN ISLANDS ; [INCLUDING WORKSHOP PAPERS], IEEE, PISCATAWAY, NJ, USA, 3 August 2008 (2008-08-03), pages 1 - 8, XP031825229, ISBN: 978-1-4244-2389-7, DOI: 10.1109/ICCCN.2008.ECP.126

## Description

### TECHNICAL FIELD

The present invention relates to a method for establishing communication between a station and an access point in a wireless network, and a corresponding wireless communication system.

### BACKGROUND

One of popular wireless networks is Wi-Fi, i.e. a family of wireless network protocols, based on the IEEE 802.11 family of standards, which are commonly used for local area networking of devices and Internet access. Wi-Fi compatible devices can network through wireless access points to each other as well as to wired devices and the Internet. Wi-Fi's wavebands have relatively high absorption and work best for line-of-sight use. Many physical obstructions such as walls may greatly reduce range of communication.

When a Wi-Fi network comprises a plurality of access points that communicate with a plurality of client stations, there is a problem of selecting an access point with which a particular station shall communicate. Typically, if a station is within a communication range of several access points, it will connect to the access point which has the highest signal strength. It may lead to a situation wherein one access point may be overloaded by communication with many stations which are located closest to it, while the other nearby access points have relatively low resource usage. This creates inefficient use scenario from the point of view of the network as a whole.

A publication "Localized access point association in wireless LANs with bounded approximation ratio." (by Lu, Mingming, and Jie Wu. in 2008 Proceedings of 17th International Conference on Computer Communications and Networks. IEEE, 2008) discloses a localized algorithm that provides a bounded approximation ratio in terms of total load and does not require the propagation of local information, as well as extension of the localized algorithm through iterative executions, to allow for adaptation to various environments.

A European patent application EP3174356 discloses a service processing method that includes: receiving, by an access network device, from a core network device, a bearer setup request message of a VoLTE service; and rejecting, by the access network device, the bearer setup request message when determining that LTE network signal quality of a terminal of the VoLTE service cannot satisfy the VoLTE service. In an example, the access network device determines, based on an LTE network uplink signal quality parameter and/or an LTE network downlink signal quality parameter of the terminal of the VoLTE service, that the LTE network signal quality of the terminal cannot satisfy the VoLTE service; the LTE network uplink signal quality parameter of the terminal includes: at least one of an LTE network uplink signal strength of the terminal, an LTE network uplink signal-to-noise ratio of the terminal, or an LTE network uplink packet loss rate of the terminal.

### SUMMARY

Therefore, there is a need to provide an alternative method for establishing communication in a wireless network between stations and access points that will result in efficient use of network resources.

The object of the invention is a method for establishing communication between a station and an access point in a wireless network, as well as a wireless communication system, according to the appended claims.

### BRIEF DESCRIPTION OF DRAWINGS

The present invention is shown by means of example embodiment on a drawing, in which:
Fig. 1 shows an example configuration of a wireless network in which the present invention is applicable;
Fig. 2 shows a schematic structure of a station and an access point;
Fig. 3 shows a method for establishing communication between a station and an access point;
Fig. 4 shows a schematic representation of a station controller and an access point controller.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

### DETAILED DESCRIPTION

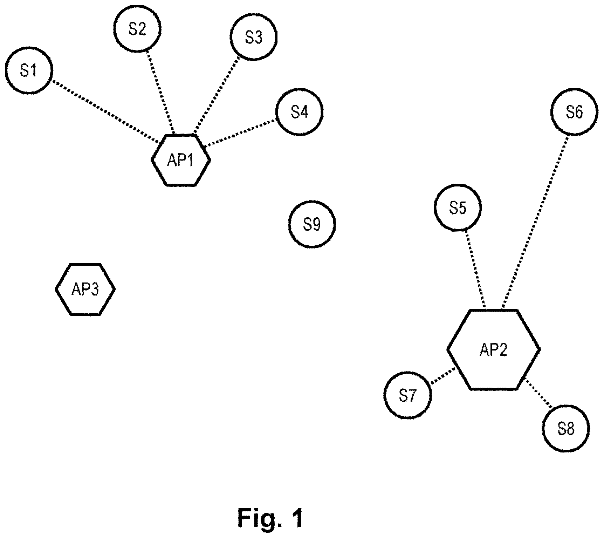

An example of a wireless network, such as a Wi-Fi network, is shown in Fig. 1. In the example shown, there are three access points AP1-AP3 located in open space. Four stations S1-S4 are connected to the first access point AP1 and four stations S5-S8 are connected to the second access point AP2, which generates a signal of a higher power than the other access points or has more antennas or has less obstacles between the access point and the stations (e.g. the other access points may be hidden behind walls or other obstacles). No station is connected to the third access point AP3, which offers the same signal power as the first access point AP1. The access points may be located in a crowded place, such as a hotel lobby, wherein many users attempt to use bandwidth-consuming resources, such as watching video streams. Assume a new station S9 attempts to connect to the system. Assume S9 receives a signal of the strongest power from AP2, then a signal of moderate power from AP1 and a low power signal from AP3.

In a typical scenario, the new station S9 would scan the available channels and notice that the strongest signal is available from the second access point AP2 and attempt to connect to that access point AP2. Consequently, the second access point AP2 would need to communicate with five stations S5-S8, S9 and divide its available bandwidth across five stations, which might even lead to a necessity to reduce quality of video in order to deliver data to all five stations.

The system according to the invention operates differently.

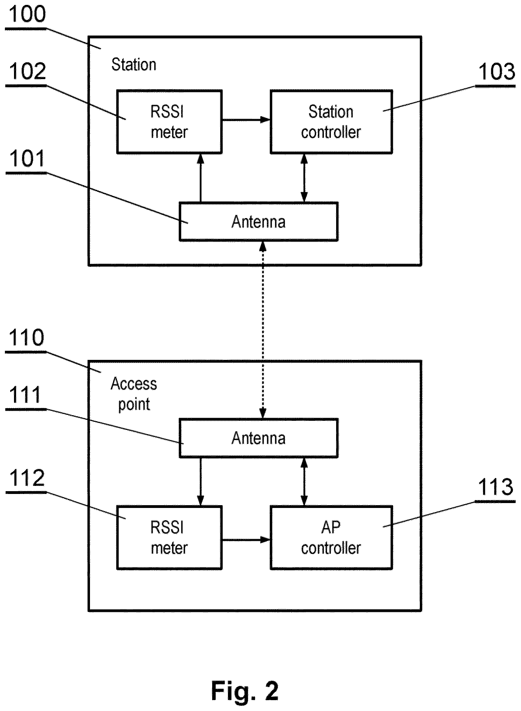

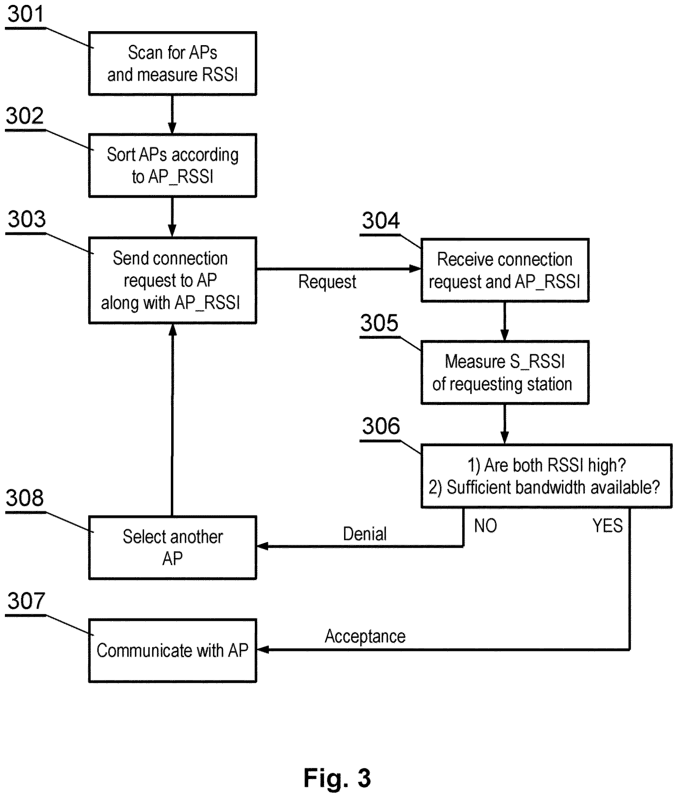

As shown in Fig. 2, each station 100 comprises an antenna 101, a signal strength meter 102 and a station controller 103. In turn, each access point 110 comprises an antenna 111, a signal strength meter 112 and an access point controller 113. For example, the signal strength meter 102, 112 may output a value of RSSI (received signal strength indicator) as well known in Wi-Fi networks. The controllers 103, 113 are configured to perform the steps of the method as shown in Fig. 3.

Fig. 3 shows a procedure for establishing communication in the wireless network, wherein the left side shows the actions performed by the station controller 103 and the right side shows the actions performed by the access point controller 113.

First, in step 301, the station controller 103 scans the channels of the wireless network in order to find all appropriate access points. In step 302, it stores the signal strength of the signal received from the access point (for example, by determining the RSSI value) and sorts the access points according to the RSSI. Next, in step 303, it attempts to connect to the access point with the highest RSSI and sends the measured value of the RSSI to the access point. In step 304 the access point controller 113 receives the request to connect along with the RSSI measured by the station. In step 305 the access point controller 113 measures the strength of signal received from the station (for example, as shown in Fig. 1, the RSSI of AP2 measured by S9 will be higher than the RSSI of S9 measured by AP2, since AP2 uses higher transmission power than S9). In step 306 the access point controller checks whether two criteria are met:
1) both signal strength values (i.e. the RSSI of the station signal measured by the access point and the RSSI of the access point signal measured by the station) are above a threshold value;
2) the access point has sufficient free bandwidth to provide service for that station on the basis of known characteristic of transmission speed with respect to the access point signal strength measured by the station

It is possible that although the access point signal strength measured by the station is moderately acceptable (i.e. not very high, but above a threshold), the access point may be already handling communications with other stations and may have not enough bandwidth to handle service for another station at some moderate signal level (which requires more bandwidth than if the signal strength was higher) - in that case, this would require the access point to reduce resources for other stations connected to it.

When checking whether sufficient bandwidth is available for the station, the access point may apply various criteria, such as:
- checking whether the bandwidth that can be offered is above a certain threshold (e.g. over 1Mbit/s) - this allows to provide a minimum quality of service;
- checking whether the bandwidth that can be offered is above an average bandwidth consumed by other stations connected to that access point - this allows to provide a quality of service at the level required by other users connected to that access point;
- in addition, the connection request received from the station may include an identifier indicating the type of services or a minimum bandwidth required by that station - then, checking whether the available bandwidth meets requirements for that service or is above the requested minimum bandwidth.

If both criteria are met, then the access point controller 113 sends an acceptance to the station controller 103 and they continue to communicate in step 307.

If at least one of these two criteria is not met, then the access point controller 113 sends a rejection to the station controller 103 and the station controller 103 selects in step 308 another access point according to the list created in step 302.

In the claimed invention, two kinds of requests are sent in step 303 from the station to the access point - a normal request and a prioritized request. A normal request is sent upon a first attempt to connect to the access point. However, in an example, if the station attempts to connect to all access points from the list created in step 302 and is rejected by all access points, it may repeat the procedure and send the requests to the access points again, but this time send a prioritized request. Upon receiving a prioritized request, the access point applies different selection criteria in step 306, for example the required threshold of the signal strength may be decreased or the access point may accept to reduce bandwidth available for stations handled so far in order to fit one more station.

Alternatively, or additionally, in step 308 the access point may send, along with a rejection request, the parameters on which the rejection was based, such as the signal strength of the station measured by the access point and the available bandwidth of the station. Upon receiving parameters from all access points, the station may select the access point for which the accessibility would be optimal and in step 303 send a third type of request - i.e. a demand to connect, without performing the assessment of step 306, just as in a typical Wi-Fi connection scenario.

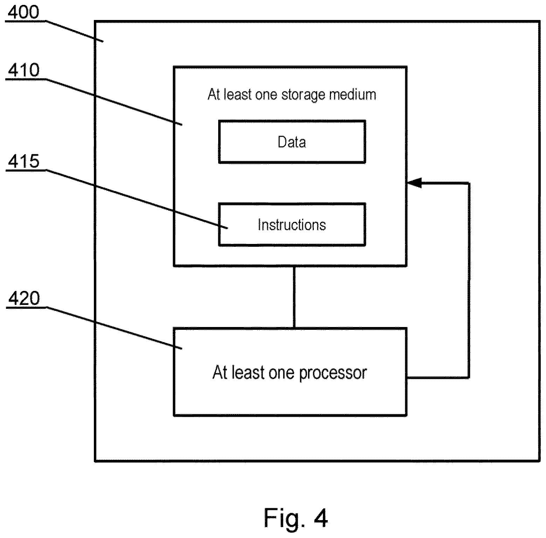

Fig. 4 shows a schematic illustration of the station controller 103 and the access point controller 113. The controller 400 may include at least one non-transitory processor-readable storage medium 410 that stores at least one of processorexecutable instructions 415 or data (such as station RSSI or access point RSSI or access points list); and at least one processor 420 communicably coupled to the at least one non-transitory processor-readable storage medium 410. The at least one processor 420 may be configured to (by executing the instructions 415) perform the corresponding steps of the method of Fig. 3 (i.e. steps 301, 302, 303, 307, 308 for the station controller 103 or steps 304, 305, 306 for the access point controller 113).

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the scope of the invention as defined by the appended claims.

Accordingly, the scope of protection is not limited to the preferred embodiments described in the specification, but is only limited by the claims that follow.

## Claims

1. A method for establishing communication between a station (100) and an access point (110) in a wireless network, the method comprising the steps of:
- at the station (100):
- measuring (301) a received signal strength, AP_RSSI, of a signal from the access point (110); and
- sending (303) to the access point (110) a connection request and the AP_RSSI;
- at the access point (110):
- receiving (304) the connection request and the AP_RSSI from the station (100);
- determining (306) whether a signal is above a threshold and whether the access point (110) has sufficient bandwidth available to communicate with the station (100) and:
- if so, sending an acceptance of connection request to the station (100) to continue (307) communication with that station and
- if not, sending a denial of connection request to the station (100).
**characterized by**:
- further comprising the step of measuring (305), at the access point (110), a received signal strength, S_RSSI, of a signal from the station (100);
- wherein determining (306) whether a signal is above a threshold comprises determining whether the AP_RSSI and the S_RSSI are both above the threshold;
- wherein the connection request is one of a regular type and a prioritized type, wherein for the prioritized type connection request, sufficient bandwidth available criteria applied by the access point are lower than for a regular type connection request;
- and the method further comprises sending (303) a prioritized type connection request from the station (100) to the access point (110) if a prior attempt to connect with a regular type connection request resulted in the denial of connection request.

2. The method according to claim 1, further comprising, at the station (100):
- creating (302) a list of access points (110) and sorting the list according to AP_RSSI;
- upon receiving a denial of connection request from the access point (110), selecting (308) another access point (110) from the list of access points.

3. The method according to any of previous claims, wherein the connection request is of a regular type and a demand type, wherein for a demand type connection request, the access point (110) always sends an acceptance of connection request to the station (100) to continue (307) communication with that station.

4. The method according to any of previous claims, wherein determining (306) whether the access point (110) has sufficient bandwidth available to communicate with the station (100) includes checking whether the bandwidth that can be offered is above a certain threshold value.

5. The method according to any of previous claims, wherein determining (306) whether the access point (110) has sufficient bandwidth available to communicate with the station (100) includes checking whether the bandwidth that can be offered is above an average bandwidth consumed by other stations connected to that access point.

6. The method according to any of previous claims, wherein determining (306) whether the access point (110) has sufficient bandwidth available to communicate with the station (100) includes checking whether the bandwidth that can be offered is sufficient for a particular type of service.

7. The method according to any of previous claims, wherein determining (306) whether the access point (110) has sufficient bandwidth available to communicate with the station (100) includes checking whether the bandwidth that can be offered is over a minimum bandwidth required by the station.

8. A wireless communication system comprising a plurality of stations (100) and access points (110), wherein a station controller (103) of each of the plurality of stations (100) and an access point controller (113) of each of the access points (110) are configured to perform respectively the steps performed by a station and an access point according to the method of any of previous claims.

## Patentansprüche

1. Verfahren zur Herstellung einer Kommunikation zwischen einer Station (100) und einem Zugangspunkt (110) in einem drahtlosen Netzwerk, wobei das Verfahren die Schritte umfasst: - an der Station (100):
- Messen (301) einer empfangenen Signalstärke, AP_RSSI, eines Signals vom Zugangspunkt (110); und
- Senden (303) einer Verbindungsanforderung und der AP_RSSI an den Zugangspunkt (110),
- am Zugangspunkt (110):
- Empfangen (304) der Verbindungsanforderung und der AP_RSSI von der Station (100);
- Bestimmen (306), ob ein Signal über einem Schwellenwert liegt und ob dem Zugangspunkt (110) ausreichend Bandbreite zur Verfügung steht, um mit der Station (100) zu kommunizieren, und:
- wenn ja, Senden einer Annahme einer Verbindungsanforderung an die Station (100), um die Kommunikation mit dieser Station fortzusetzen (307), und
- wenn nicht, Senden einer Ablehnung einer Verbindungsanforderung an die Station (100) **gekennzeichnet durch**:
- weiteres Umfassen des Schritts des Messens (305), am Zugangspunkt (110), einer empfangenen Signalstärke, S_RSSI, eines Signals von der Station (100);
- wobei das Bestimmen (306), ob ein Signal über einem Schwellenwert liegt, das Bestimmen umfasst, ob sowohl die AP_RSSI als auch die S_RSSI über dem Schwellenwert liegen;
- wobei die Verbindungsanforderung entweder vom regulären Typ oder vom priorisierten Typ ist, wobei für die Verbindungsanforderung des priorisierten Typs die vom Zugangspunkt angewendeten Kriterien hinsichtlich ausreichender, zur Verfügung stehender Bandbreite niedriger sind als für eine Verbindungsanforderung des regulären Typs;
- und das Verfahren ferner das Senden (303) einer Verbindungsanforderung vom priorisierten Typ von der Station (100) an den Zugangspunkt (110) umfasst, wenn ein vorheriger Verbindungsversuch mit einer Verbindungsanforderung vom regulären Typ zur Ablehnung der Verbindungsanforderung geführt hat.

2. Verfahren nach Anspruch 1, ferner umfassend an der Station (100):
- Erstellen (302) einer Liste von Zugangspunkten (110) und Sortieren der Liste nach AP RSSI;
- nach dem Empfangen einer Ablehnung der Verbindungsanforderung vom Zugangspunkt (110), Auswählen (308) eines anderen Zugangspunkts (110) aus der Liste von Zugangspunkten.

3. Verfahren nach einem der vorhergehenden Ansprüche, wobei die Verbindungsanforderung von einem regulären Typ und einem Forderungstyp ist, wobei für eine Verbindungsanforderung vom Forderungstyp der Zugangspunkt (110) immer eine Annahme der Verbindungsanforderung an die Station (100) sendet, um die Kommunikation mit dieser Station fortzusetzen (307).

4. Verfahren nach einem der vorhergehenden Ansprüche, wobei das Bestimmen (306), ob dem Zugangspunkt (110) ausreichend Bandbreite zur Verfügung steht, um mit der Station (100) zu kommunizieren, das Überprüfen beinhaltet, ob die Bandbreite, die angeboten werden kann, über einem bestimmten Schwellenwert liegt.

5. Verfahren nach einem der vorhergehenden Ansprüche, wobei das Bestimmen (306), ob dem Zugangspunkt (110) ausreichend Bandbreite zur Verfügung steht, um mit der Station (100) zu kommunizieren, das Überprüfen beinhaltet, ob die Bandbreite, die angeboten werden kann, über einer durchschnittlichen Bandbreite liegt, die von anderen Stationen verbraucht wird, die mit diesem Zugangspunkt verbunden sind.

6. Verfahren nach einem der vorhergehenden Ansprüche, wobei das Bestimmen (306), ob dem Zugangspunkt (110) ausreichend Bandbreite zur Verfügung steht, um mit der Station (100) zu kommunizieren, das Überprüfen beinhaltet, ob die Bandbreite, die angeboten werden kann, für einen bestimmten Diensttyp ausreichend ist.

7. Verfahren nach einem der vorhergehenden Ansprüche, wobei das Bestimmen (306), ob dem Zugangspunkt (110) ausreichend Bandbreite zur Verfügung steht, um mit der Station (100) zu kommunizieren, das Überprüfen beinhaltet, ob die Bandbreite, die angeboten werden kann, über einer Mindestbandbreite liegt, die von der Station benötigt wird.

8. Drahtloses Kommunikationssystem, umfassend eine Vielzahl von Stationen (100) und Zugangspunkten (110), wobei ein Stations-Controller (103) jeder der Vielzahl von Stationen (100) und ein Zugangspunkt-Controller (113) jedes der Zugangspunkte (110) so konfiguriert sind, dass sie jeweils die Schritte durchführen, die von einer Station und einem Zugangspunkt gemäß dem Verfahren nach einem der vorhergehenden Ansprüche durchgeführt werden.

## Revendications

1. Procédé permettant l'établissement d'une communication entre une station (100) et un point d'accès (110) dans un réseau sans fil, le procédé comprenant les étapes de :
- au niveau de la station (100) :
- mesure (301) d'une intensité de signal reçu, AP_RSSI, d'un signal en provenance du point d'accès (110) ; et
- envoi (303) au point d'accès (110) d'une requête de connexion et de l'AP_RSSI ;
- au niveau du point d'accès (110) :
- réception (304) de la requête de connexion et de l'AP_RSSI en provenance de la station (100) ;
- détermination (306) si un signal est supérieur à un seuil et si le point d'accès (110) dispose d'une bande passante suffisante disponible pour communiquer avec la station (100) et :
- si tel est le cas, envoi d'une requête d'acceptation de connexion à la station (100) pour poursuivre (307) la communication avec cette station et
- dans le cas contraire, envoi d'une requête de refus de connexion à la station (100) **caractérisé par** :
- comprenant en outre l'étape de mesure (305), au niveau du point d'accès (110), d'une intensité de signal reçu, S_RSSI, d'un signal en provenance de la station (100) ;
- dans lequel la détermination (306) si un signal est supérieur à un seuil comprend la détermination si l'AP_RSSI et le S_RSSI sont tous deux supérieurs au seuil ;
- dans lequel la requête de connexion est l'un d'un type régulier et d'un type prioritaire, dans lequel pour la requête de connexion de type prioritaire, les critères de bande passante disponible suffisante appliqués par le point d'accès sont inférieurs à ceux d'une requête de connexion de type régulier ;
- et le procédé comprend en outre l'envoi (303) d'une requête de connexion de type prioritaire de la station (100) au point d'accès (110) si une tentative préalable de connexion avec une requête de connexion de type régulier a abouti au refus de la requête de connexion.

2. Procédé selon la revendication 1, comprenant en outre, au niveau de la station (100) :
- la création (302) d'une liste de points d'accès (110) et le tri de la liste selon l'AP_RSSI ;
- lors de la réception d'une requête de refus de connexion en provenance du point d'accès (110), la sélection (308) d'un autre point d'accès (110) parmi la liste de points d'accès.

3. Procédé selon l'une quelconque des revendications précédentes, dans lequel la requête de connexion est d'un type régulier et d'un type sur demande, dans lequel pour une requête de connexion de type sur demande, le point d'accès (110) envoie toujours une requête d'acceptation de connexion à la station (100) pour poursuivre (307) la communication avec cette station.

4. Procédé selon l'une quelconque des revendications précédentes, dans lequel la détermination (306) si le point d'accès (110) dispose d'une bande passante suffisante disponible pour communiquer avec la station (100) comprend la vérification si la bande passante qui peut être proposée est supérieure à une certaine valeur seuil.

5. Procédé selon l'une quelconque des revendications précédentes, dans lequel la détermination (306) si le point d'accès (110) dispose d'une bande passante suffisante disponible pour communiquer avec la station (100) comprend la vérification si la bande passante qui peut être proposée est supérieure à une bande passante moyenne consommée par d'autres stations connectées à ce point d'accès.

6. Procédé selon l'une quelconque des revendications précédentes, dans lequel la détermination (306) si le point d'accès (110) dispose d'une bande passante suffisante pour communiquer avec la station (100) comprend la vérification si la bande passante qui peut être proposée est suffisante pour un type particulier de service.

7. Procédé selon l'une quelconque des revendications précédentes, dans lequel la détermination (306) si le point d'accès (110) dispose d'une bande passante suffisante disponible pour communiquer avec la station (100) comprend la vérification si la bande passante qui peut être proposée dépasse une bande passante minimale requise par la station.

8. Système de communication sans fil comprenant une pluralité de stations (100) et de points d'accès (110), dans lequel un contrôleur de station (103) de chacune de la pluralité de stations (100) et un contrôleur de point d'accès (113) de chacun des points d'accès (110) sont configurés pour effectuer respectivement les étapes effectuées par une station et un point d'accès selon le procédé de l'une quelconque des revendications précédentes.
